(19)

**Europäisches Patentamt**

**European Patent Office**

**Office européen des brevets**

(11)  **EP 1 361 419 B1**

(12)  **FASCICULE DE BREVET EUROPEEN**

(45) Date de publication et mention
de la délivrance du brevet:
**12.10.2005  Bulletin 2005/41**

(51) Int Cl.⁷: **G01J 11/00**

(21) Numéro de dépôt: **03290857.6**

(22) Date de dépôt: **07.04.2003**

(54) **Procédé et dispositif pour la mesure de la phase et de l'amplitude des impulsions lumineuses ultra brèves**

Vorrichtung und Verfahren zur Messung von ultrakurzen Lichtimpulsen

Method and apparatus for measuring phase and amplitude of ultrashort light pulses

(84) Etats contractants désignés:
**AT BE BG CH CY CZ DE DK EE ES FI FR GB GR HU IE IT LI LU MC NL PT RO SE SI SK TR**

(30) Priorité: **07.05.2002  FR 0205872**

(43) Date de publication de la demande:
**12.11.2003  Bulletin 2003/46**

(73) Titulaire: **Fastlite**
**91194 Saint Aubin Cedex (FR)**

(72) Inventeurs:
• **Joffre, Manuel**
**91120 Palaiseau (FR)**
• **Oksenhendler, Thomas**
**91940 Gometz le Chatel (FR)**
• **Kaplan, Daniel**
**75006 Paris (FR)**

• **Tournois, Pierre**
**06800 Cagnes sur Mer (FR)**

(74) Mandataire: **de Saint-Palais, Arnaud Marie**
**Cabinet Moutard,**
**35, rue de la Paroisse**
**78000 Versailles (FR)**

(56) Documents cités:
• **J.CHILLA AND O.MARTINEZ: "Direrct determination of the amplitude and the phase of femtosecond light pulses" OPTICS LETTERS, vol. 16, no. 1, 1 janvier 1999 (1999-01-01), pages 39-41, XP002229628 Washington, US**
• **I.CORMACK ET AL: "Rapid measurement of ultrashort-pulse amplitude and phase from a two-photon absorption sonogram trace" J. OPT.SOC. AM. B, vol. 18, no. 9, 1 septembre 2001 (2001-09-01), pages 1377-1382, XP002229629 Washington, US**

## Description

La présente invention concerne un procédé et un dispositif pour la mesure de la phase et de l'amplitude des impulsions lumineuses ultra brèves.

D'une façon générale, on sait que la mesure de l'amplitude et de la phase des impulsions lumineuses ultra brèves, de durée comprise entre quelques femtosecondes et quelques picosecondes, présente de nombreuses difficultés.

Les diverses méthodes de mesure possibles à l'heure actuelle sont décrites dans les documents suivants :

I.A. Walmsley and R. Trebino : "Measuring fast pulses with slow detectors", Optics and Photonics News, March 1996, vol 7, No. 3, p. 23

C. Dorrer and M. Joffre : "Characterization of the spectral phase of ultrashort light pulses", C. R. Acad. Sc. Paris, t. 2, série IV, p. 1415-1426,2001

Ces méthodes diffèrent selon que l'on dispose ou non d'une impulsion de référence pour mesurer la phase et l'amplitude de l'impulsion brève inconnue.

Dans le cas où l'on ne dispose pas d'une impulsion de référence, il est nécessaire, pour déterminer les caractéristiques de l'impulsion optique à mesurer, d'utiliser au moins un élément optique à réponse non linéaire. Ceci résulte notamment du document "C. Dorrer and M. Joffre".

Parmi les méthodes de ce dernier type, on peut citer la méthode FROG (Frequency Resolved Optical Gating), la méthode TROG (Time Resolved Optical Gating) et la méthode SPIDER (Spectral Phase Interferometry for Direct Electric field Reconstruction), ces trois méthodes étant décrites dans les documents suivants :

R. Trebino and D.J. Kane : "Using phase retrieval to measure the intensity and phase of ultrashort pulses : Frequency Resolved Optical Gating", J. Opt. Soc. Am., A11, p. 2429-2437, 1993 pour ce qui concerne la méthode FROG

J.L.A. Chilla and O.E. Martinez: "Direct détermination of the amplitude and phase of femtosecond light pulses", Opt. Lett., 16, p. 39-41, 1991

R.G.M.P. Koumans and A. Yariv: "Time Resolved Optical Gating based on dispersive propagation : a new method to characterized optical pulses", IEEE Journal of Quantum Electronics, 36, p. 137-144, 2000 pour ce qui concerne la méthode TROG

C. Iaconis and I.A. Walmsley: "Spectral Phase Interferometry for Direct Electric-field Reconstruction of ultrashort optical pulses", Opt. Lett., 23, p. 792-794, 1998 pour ce qui concerne la méthode SPIDER

Il s'avère que toutes ces méthodes de l'état de l'art font appel à des montages optiques associant un sous-ensemble réalisant une fonction de filtrage optique linéaire à l'élément optique à réponse non linéaire précité. Ces montages optiques sont en général complexes et nécessitent des alignements optiques précis.

L'invention a donc plus particulièrement pour but de supprimer ces inconvénients. Elle propose donc de simplifier la mesure de l'amplitude et de la phase des impulsions lumineuses ultra brèves, en utilisant pour la fonction de filtrage optique linéaire, une interaction acousto-optique entre deux faisceaux optique et acoustique colinéaires ou quasi-colinéaires, en effectuant un mélange dans un élément à réponse non linéaire des signaux optiques diffractés par le faisceau acoustique.

D'une façon plus précise, cette fonction de filtrage est basée sur une interaction acousto-optique colinéaire ou quasi-colinéaire dans un cristal acousto-optique biréfringent destiné à maximiser la longueur d'interaction effective entre une onde optique d'entrée $E_{in}$(t) et une onde acoustique programmable qui reproduit spatialement la forme du signal électrique S(t) appliqué à un transducteur piézoélectrique associé au cristal.

Comme ceci est expliqué dans le brevet FR No 96 10717 et le brevet FR No 00 08278 déposé au nom de la Demanderesse et dont les numéros de publication sont FR-A-2 751 095 et FR-A-2 810 750 respectivement, dans l'approximation où les ondes diffractées de sortie du cristal sont d'intensité faible devant l'intensité de l'onde optique d'entrée, le filtre acousto-optique programmable réalise une convolution entre l'amplitude du signal d'entrée $E_{in}$(t) et un signal $S(t/\alpha)$ dérivé du signal électrique S(t) appliqué au transducteur piézoélectrique associé au cristal, comme cela est décrit dans l'article de P. Tournois "Acousto-optic programmable dispersive filter for adaptive compensation of group delay time dispersion in laser systems" paru dans la revue Optics Communications le 1er Août 1997, p. 245-249 et dans l'article de F. Verluise et al. "Amplitude and phase control of ultrashort pulses by use of an acousto-optic programmable dispersive filter : pulse compression and shaping" paru dans Optics Letters le 15 avril 2000, p. 575-577, soit :

$$E_{diffractée}(t) = E_{in}(t) \otimes S(^t/_\alpha)$$

$\alpha$ étant défini dans l'article précédemment cité.

Dans un tel dispositif de filtrage, le signal optique diffracté par l'interaction avec le faisceau acoustique a donc subi un filtrage linéaire dont la fonction de filtrage dépend de la forme temporelle du signal acoustique. La direction de propagation de l'énergie de l'onde acoustique peut être linéaire ou quasi-linéaire avec la direction de propagation de l'énergie de l'onde optique d'entrée dans leur zone d'interaction.

Dans le but d'effectuer une mesure de la phase d'impulsions lumineuses ultra brèves appliquées à l'entrée du dispositif de filtrage, l'invention propose de disposer à la sortie de ce dispositif de filtrage un élément optique à réponse non linéaire destiné à effectuer le mélange des signaux optique diffractés par le faisceau acoustique.

En fait, l'élément optique à réponse non linéaire qu'il est nécessaire d'associer à la fonction de filtrage peut être réalisé par exemple à l'aide de détecteurs quadratiques intégrateurs produisant un signal électrique à partir d'un signal optique incident, ces détecteurs étant de type détecteur "à deux photons", décrits ci-après.

Le détecteur intégrateur de type "à un photon" est un détecteur dont le signal est proportionnel au carré de l'amplitude du champ électrique optique appliqué, c'est-à-dire à l'intensité optique. Il peut être réalisé, par exemple, par un détecteur photoélectrique constitué d'une diode à semi-conducteur, telle que l'énergie de la bande interdite du semi-conducteur soit inférieure à l'énergie des photons incidents. Par exemple, pour des photons de longueur d'onde 0,8 $\mu$m, on pourra utiliser un détecteur à base de silicium. Dans ce cas, la constante d'intégration du détecteur est supérieure à la durée des signaux optiques.

Le détecteur intégrateur "à deux photons" est un détecteur dont le signal est proportionnel au carré de l'intensité optique appliqué. S'il est réalisé à partir d'une diode à semi-conducteur, l'énergie de la bande interdite du semi-conducteur devra être supérieure à l'énergie des photons incidents, mais inférieure au double de cette énergie. Par exemple, pour des photons de longueur d'onde de 0,8 $\mu$m, on pourra utiliser un détecteur à base de phosphure de gallium (GaP). La constante d'intégration du détecteur est supérieure à la durée des signaux optiques.

Selon une première variante de l'invention, le signal optique à mesurer interagit avec deux signaux acoustiques, au moins, modulés en amplitude et en fréquence et comportant les uns par rapport aux autres des écarts temporels ajustables.

Selon une autre variante de l'invention, le signal optique à mesurer interagit avec trois signaux acoustiques, au moins, dont l'un au moins est une fréquence pure ou quasi-pure et deux autres au moins des signaux acoustiques modulés en amplitude et en fréquence et comportant les uns par rapport aux autres des écarts temporels ajustables.

Des modes de mise en oeuvre du procédé selon l'invention seront décrits ci-après, à titre d'exemples non limitatifs, avec référence aux dessins annexés dans lesquels :

La figure 1 est une représentation schématique d'un premier mode de réalisation d'un dispositif de mesure de la phase et de l'amplitude d'impulsions lumineuses ultra brèves utilisant deux détecteurs à un photon ;

La figure 2 est une représentation schématique d'un second mode de réalisation d'un dispositif de mesure du type de celui de la figure 1 mais utilisant un détecteur à un photon et un détecteur à deux photons.

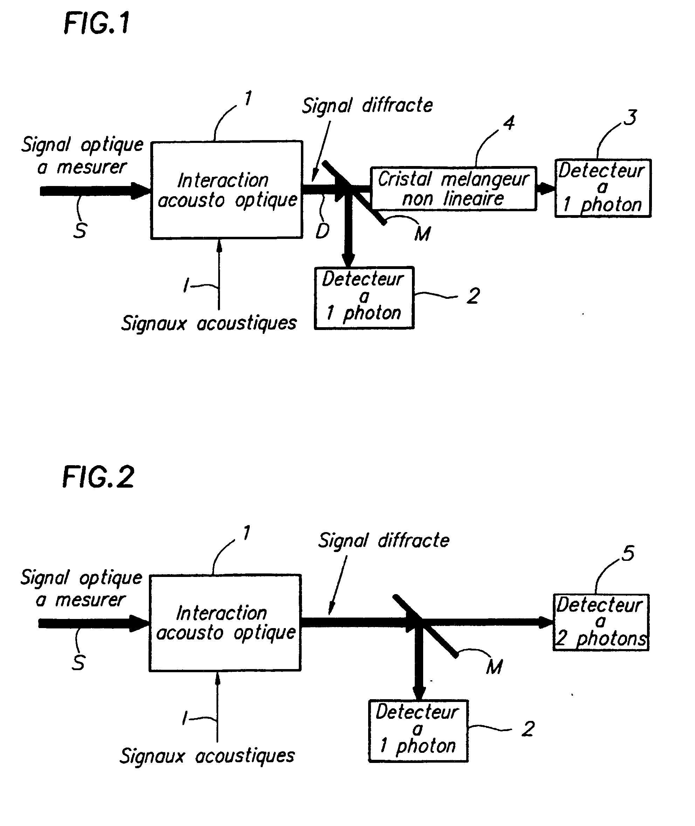

Dans le mode de réalisation représenté sur la figure 1, le signal optique à mesurer S est transmis à un bloc d'interaction acousto-optique 1 par exemple du type de ceux qui se trouvent décrits dans le brevet FR No 96 10717 et le brevet FR No 00 08278 déposé au nom de la Demanderesse qui font intervenir au moins un cristal acousto-optique biréfringent comprenant une face d'entrée sur laquelle le signal optique (polarisé) est appliqué, une face de sortie de laquelle sortent les ondes optiques D diffractées au sein du cristal et au moins un transducteur piézoélectrique sur lequel est appliqué un signal électrique I provenant d'un générateur de signaux piloté par un calculateur.

Dans le bloc d'interaction acousto-optique 1, la direction de propagation de l'énergie de l'onde acoustique peut être colinéaire ou quasi-colinéaire avec la direction de propagation de l'énergie de l'onde optique d'entrée dans leur zone d'interaction.

Parmi les divers cristaux qui peuvent être utilisés (tels que, par exemple, le Niobate de Lithium, le Molybdate de Calcium ...), le dioxyde de Tellure conduit à un rendement acousto-optique particulièrement grand pour une interaction colinéaire ou quasi-colinéaire suivant les vecteurs de "Poynting" des faisceaux optique et acoustique, dans le cas de l'onde acoustique transverse lente : Ce cristal sera donc utilisé de préférence.

Le signal diffracté sortant du bloc d'interaction acousto-optique 1 est appliqué à un miroir semi-réfléchissant M, orienté à 45° qui réfléchit une fraction du signal diffracté en direction d'un premier détecteur à un photon 2 et qui transmet une autre fraction de ce signal à un second détecteur à un photon 3, par l'intermédiaire d'un cristal mélangeur non linéaire 4.

Comme cela sera expliqué ci-après, cette configuration permet d'extraire l'intensité spectrale et la phase spectrale du signal optique à mesurer, le détecteur à un photon 2 étant plus particulièrement utilisé pour extraire l'intensité spectrale et le détecteur à un photon 3 pour la phase spectrale.

Dans le mode de réalisation de la figure 2, qui correspond à une seconde mise en oeuvre de l'invention, le signal optique diffracté sortant du bloc d'interaction acousto-optique 1 est directement transmis sur un détecteur à deux photons 5, qui réalise en un seul composant le mélange par interaction non linéaire et la détection quadratique, qui étaient réalisés par deux éléments distincts (mélangeur non linéaire 4/détecteur à un photon 3) dans l'exemple de la figure 1. Dans cet exemple, comme dans la figure 1, une portion du signal diffracté est extraite grâce à un miroir semi-réfléchissant M et envoyée sur un détecteur à un photon 2.

Ces configurations, et plus particulièrement celle de la figure 2, sont simples et ne nécessitent aucun alignement optique précis, comme c'est le cas dans les dispositifs de mesure actuellement utilisés dans l'état de l'art.

L'invention sera mieux comprise en examinant la fonction générale du bloc d'interaction acousto-optique 1 et un certain nombre d'exemples de méthodologies de mesure.

Comme précédemment mentionné, le coeur du bloc d'interaction acousto-optique 1 est un cristal biréfringent, tel que le dioxyde de Tellure ($TeO_2$) portant un transducteur convertissant des signaux électriques en signaux acoustiques. Si l'on considère que le signal électrique et, par conséquent, son correspondant acoustique, sont constitués de composantes spectrales d'amplitude A(f) et phase $\Phi$(f) données, pour chacune des fréquences f, le dispositif diffracte une fréquence optique définie $v$(f). L'amplitude diffractée a($v$) est proportionnelle à l'amplitude spectrale acoustique A(f) et la phase de l'onde diffractée $\phi$(f) est à une constante près la phase de l'onde acoustique $\Phi$(f). On peut donc programmer l'amplitude et la phase optique en programmant l'amplitude et la phase acoustique, c'est-à-dire que l'on dispose d'un filtre linéaire transversal général. En superposant plusieurs signaux acoustiques, on peut obtenir plusieurs signaux optiques à partir du signal optique incident, dont les caractéristiques comme le retard optique relatif, la modulation d'amplitude, la modulation de fréquence, etc.., peuvent être ajustées.

L'invention s'applique d'une façon particulièrement avantageuse dans les applications faisant intervenir une telle superposition de signaux optiques :

- Ainsi, la méthode d'autocorrélation interférométrique décrite dans le document K. Naganuma, K. Mogi and H. Yamada : "General method for ultrashort light pulse measurement", IEEE Journal of Quantum Electronics, 25, p. 1225-1233, 1989 nécessite la superposition de deux signaux optiques séparés d'une distance temporelle $\tau$ ajustable, dont on mesure à la fois l'intensité spectrale et le carré de l'intensité spectrale en fonction de $\tau$. Au moyen d'un calcul algorithmique complexe, on extrait de ces données la phase et l'amplitude du signal optique incident. Ce résultat peut être obtenu plus simplement grâce au montage de la figure 2, dans lequel le bloc d'interaction acousto-optique génère les deux signaux avec un décalage variable $\tau$, la diode à un photon fournit l'intensité spectrale et la diode à deux photons le carré de l'intensité spectrale, dont on extrait la phase spectrale.

- De même, la méthode de type TROG précédemment évoquée (document "J.L.A. Chilla and O.E. Martinez") nécessite la superposition de deux signaux optiques dont l'un est une réplique du signal à mesurer et l'autre une fréquence quasi-pure. En balayant la position de la première impulsion dans l'intervalle de temps de la deuxième (balayage en $\tau$) et en réalisant ce balayage pour plusieurs valeurs de la fréquence pure on obtient des cartes temps-fréquence de l'intensité spectrale et du carré de l'intensité spectrale. Ces balayages peuvent être réalisés par le bloc d'interaction acousto-optique du type de celui mis en oeuvre par le procédé selon l'invention. Un calcul adéquat permet alors de remonter aux caractéristiques de l'impulsion à mesurer.

- La méthode de type TROG décrite dans le document "R.G.M.P. Koumans and A. Yariv" met en oeuvre la superposition de deux signaux optiques différents, modulés tous les deux linéairement en fréquence et séparés d'une distance temporelle $\tau$ ajustable. Au moyen d'un balayage de cette distance temporelle et d'un balayage en pente de la modulation linéaire en fréquence de l'un ou des deux signaux, on obtient des cartes temps-pentes qui permettent de remonter aux caractéristiques de l'impulsion optique à mesurer.

- Les méthodes de type SPIDER décrites dans les documents "C. Iaconis and I.A. Walmsley : "Spectral Phase Interferometry for Direct Electric-field Reconstruction of ultrashort optical pulses", Opt. Lett., 23, p. 792-794, 1998" et "C. Dorrer, P. Londero and I.A. Walmsley : "Homodyne detection in spectral interferometry for direct electric-field reconstruction" Opt. Lett., 26, p. 1510-1512, 2001" nécessitent la superposition de trois signaux, dont une fréquence pure et deux répliques du signal à mesurer décalés temporellement d'une distance temporelle $\tau$ ajustable. Au moyen d'un balayage de cette distance temporelle pour diverses fréquences pures, on obtient des cartes temps-fréquences qui permettent de remonter aux caractéristiques de l'impulsion optique à mesurer.

De manière plus générale, l'invention permet d'implanter toutes méthodologies basées sur la mesure du carré de l'intensité spectrale d'une combinaison quelconque d'impulsions dérivées par filtrage linéaire de l'impulsion à mesurer. Par ailleurs, les mesures de l'intensité spectrale sont fréquemment réalisées par des analyseurs de spectre.

Dans l'invention proposée, les analyseurs de spectre sont remplaçables par des fonctions de corrélation réalisées par des décalages temporels $\tau$ programmés, suivis de détections quadratiques à un photon (spectroscopie par transformée de Fourier). Il en résulte une simplification supplémentaire des montages et l'élimination d'un composant coûteux nécessitant des calibrations délicates.

## Revendications

**1.** Procédé pour la mesure de la phase et/ou de l'amplitude des impulsions ultra brèves d'un signal lumineux,
comportant les étapes suivantes :

- un filtrage optique linéaire dudit signal (S) grâce à une interaction acoustique entre le signal optique (S) et un faisceau acoustique colinéaire ou quasi-colinéaire,

   **caractérisé par** :

- un mélange dans un élément électrooptique à réponse non linéaire (4) des faisceaux optiques diffractés par le faisceau acoustique, suivi d'au moins un détecteur de l'intensité lumineuse issue du mélangeur (4),
- ou au moins une détection-intégration du carré de l'intensité optique diffractée par le faisceau acoustique.

**2.** Procédé selon la revendication 1,
**caractérisé en ce que** le susdit filtrage est basé sur une interaction acousto-optique colinéaire ou quasi-colinéaire dans un cristal acousto-optique biréfringent (1).

**3.** Procédé selon l'une des revendications 1 et 2,
**caractérisé en ce que** la mesure de l'amplitude est obtenue par détection-intégration d'une fraction des faisceaux optiques diffractés par le faisceau acoustique par un détecteur-intégrateur de type à un photon (2).

**4.** Procédé selon l'une des revendications précédentes,
**caractérisé en ce que** la mesure de la phase comprend la détection-intégration par un détecteur-intégrateur de type à un photon (3) d'une fraction des faisceaux optiques diffractés par le faisceau acoustique, et ayant traversé un cristal mélangeur non linéaire (4).

**5.** Procédé selon l'une des revendications 1 à 3,
**caractérisé en ce que** la mesure de la phase comprend la détection-intégration par un détecteur-intégrateur de type à deux photons (5).

**6.** Dispositif pour la mise en oeuvre du procédé selon la revendication 1,
comprenant un composant (1) réalisant une interaction acousto-optique entre des faisceaux optiques et acoustiques colinéaires ou quasi-colinéaires, **caractérisé en ce qu'**il comporte :

   au moins un détecteur intégrateur (5) du carré de l'intensité optique diffractée par le faisceau acoustique.

**7.** Dispositif selon la revendication 6 utilisant, en outre, au moins un détecteur intégrateur (2) de l'intensité optique diffractée par le faisceau acoustique.

**8.** Dispositif pour la mesure de la phase et de l'amplitude des impulsions lumineuses ultra brèves, comprenant un composant (1) réalisant une interaction acousto-optique entre des faisceaux optiques et acoustiques colinéaires ou quasi-colinéaires, **caractérisé en ce qu'**il comporte :

   au moins un cristal optique non linéaire (4) mélangeur des signaux optiques diffractés par le faisceau acoustique et au moins un détecteur intégrateur (3) de l'intensité optique issue du cristal mélangeur précité.

**9.** Dispositif selon la revendication 8,
**caractérisé en ce qu'**il comprend, en outre, un détecteur intégrateur (2) de l'intensité optique diffractée par le faisceau acoustique.

**10.** Dispositif selon l'une des revendications 6 et 8,
**caractérisé en ce que** le signal optique à mesurer (S) interagit avec deux signaux acoustiques, au moins, modulés en amplitude et en fréquence et comportant les uns par rapport aux autres des écarts temporels ajustables.

**11.** Dispositif selon l'une des revendications 6 et 8,
**caractérisé en ce que** le signal optique à mesurer (S) interagit avec trois signaux acoustiques, au moins, dont l'un au moins est une fréquence pure ou quasi-pure et deux autres au moins des signaux acoustiques modulés en amplitude et en fréquence et comportant les uns par rapport aux autres des écarts temporels ajustables.

## Patentansprüche

**1.** Verfahren zur Messung der Phase und/oder Amplitude der ultrakurzen Impulse eines Lichtsignals, mit den folgenden Schritten:

- einer linearen optischen Filtrierung des genannten Signals (S) dank einer akustischen Wechselwirkung zwischen dem optischen Signal (S) und einem kolinearen oder fast kolinearen Schallstrahl, **gekennzeichnet durch**:
- eine Mischung der vom Schallstrahl gebeugten Lichtstrahlen in einem elektrooptischen Element mit nicht linearer Antwort (4), gefolgt von mindestens einem Messgerät für die vom Mischer ausgesandte Lichtstärke (4),

- oder mindestens eine Ermittlung/Integration des Quadrats der **durch** den Schallstrahl gebeugten optischen Intensität.

2. Verfahren nach Anspruch 1, **gekennzeichnet dadurch, dass** die besagte Filtrierung auf einer kolinearen oder fast kolinearen optoakustischen Wechselwirkung in einem doppelbrechenden optoakustischen Kristall (1) basiert.

3. Verfahren nach einem der Ansprüche 1 und 2, **gekennzeichnet dadurch, dass** die Messung der Amplitude durch Erfassung/Integration eines Bruchteils der vom Schallstrahl gebeugten Lichtstrahlen durch ein Mess- und Integriergerät mit einem Photon (2) geschieht.

4. Verfahren nach einem der vorherigen Ansprüche, **gekennzeichnet dadurch, dass** die Messung der Phase die Ermittlung/Integration eines Bruchteils der vom Schallstrahl gebeugten Lichtstrahlen, die einen nicht linearen Mischkristall (4) durchquert haben, durch ein Mess- und Integriergerät mit einem Photon (3) umfasst.

5. Verfahren nach einem der Ansprüche 1 bis 3, **gekennzeichnet dadurch, dass** die Messung der Phase die Ermittlung/Integration durch ein Mess- und Integriergerät mit zwei Photonen (5) umfasst.

6. Vorrichtung für die Durchführung des Verfahrens nach Anspruch 1, mit einem Bestandteil (1), der eine optoakustische Wechselwirkung zwischen kolinearen oder fast kolinearen Licht- und Schallstrahlen ermöglicht, **gekennzeichnet dadurch, dass** er mindestens ein Mess- und Integriergerät (5) für das Quadrat der durch den Schallstrahl gebeugten optischen Intensität unifasst.

7. Vorrichtung nach Anspruch 6, die außerdem mindestens ein Mess- und Integriergerät (2) für die durch den Schallstrahl gebeugte optische Intensität benutzt.

8. Vorrichtung zur Messung der Phase und der Amplitude ultrakurzer Lichtimpulse, mit einem Bestandteil (1), der eine optoakustische Wechselwirkung zwischen kolinearen oder fast kolinearen Licht- und Schallstrahlen ermöglicht, **gekennzeichnet dadurch, dass** er mindestens einen nicht linearen optischen Kristall (4) zum Mischen der vom Schallstrahl gebeugten optischen Signale und mindestens ein Mess- und Integriergerät (3) für die vom vorgenannten Mischkristall ausgesandte optische Intensität umfasst.

9. Vorrichtung nach Anspruch 8, **gekennzeichnet dadurch, dass** sie außerdem ein Mess- und Integriergerät (2) für die durch den Schallstrahl gebeugte optische Intensität umfasst.

10. Vorrichtung nach einem der Ansprüche 6 und 8, **gekennzeichnet dadurch, dass** das zu messende optische Signal (S) mit mindestens zwei akustischen Signalen zusammenwirkt, die in Amplitude und Frequenz moduliert sind und untereinander regelbare zeitliche Abstände aufweisen.

11. Vorrichtung nach einem der Ansprüche 6 und 8, **gekennzeichnet dadurch, dass** das zu messende optische Signal (S) mit mindestens drei akustischen Signalen zusammenwirkt, von denen mindestens eines ein reine oder fast reine Frequenz ist und zwei andere mindestens in Amplitude und Frequenz modulierte akustische Signale mit untereinander regelbaren zeitlichen Abständen.

**Claims**

1. Method for measuring the phase and/or amplitude of ultrashort pulses of a light signal, comprising the following steps:

   - a linear optical filtering of said signal (S) by means of an acoustic interaction between the optical signal (S) and a collinear or quasi-collinear acoustic beam,

   **characterised by**

   - a mixing in a non-linear response electro-optic element (4) of the optical beams diffracted by the acoustic beam followed by at least one detector for detecting the light intensity derived from the mixer (4),
   - or at least one detection-integration of the square of the optical intensity diffracted by the acoustic beam.

2. Method according to claim 1, **characterised in that** said filtering is based on a collinear or quasi-collinear acousto-optic interaction in a birefringent acousto-optic crystal (1).

3. Method according to claim 1 or 2, **characterised in that** the measurement of the amplitude is obtained by the detection-integration of a fraction of the optical beams diffracted by the acoustic beam by a one photon integrator-detector having (2).

4. Method according to one of the preceding claims, **characterised in that** the measurement of the phase includes the detection-integration by a one photon detector-integrator (3) of a fraction of the optical beams diffracted by the acoustic beam and having traversed a non-linear mixing crystal (4).

5. Method according to one of claims 1 to 3, **characterised in that** the measurement of the phase includes the detection-integration by a two photons detector-integrator (5).

6. Device for implementing the method according to claim 1, comprising a component (1) carrying out an acousto-optic interaction between the optical beams and collinear or quasi-collinear acoustic and optical beams **characterised in that** it comprises
at least one integrator-detector (5) for detecting the square of the optical intensity diffracted by the acoustic beam.

7. Device according to claim 6 and using in addition at least one detector-integrator (2) for detecting the optical intensity diffracted by the acoustic beam.

8. Device for measuring the phase and amplitude of ultrashort light pulses, comprising a component (1) carrying out an acousto-optic interaction between the optical beams and the collinear or quasi-collinear acoustic beams, **characterised in that** it comprises
at least one non-linear optical crystal (4) for mixing the optical signals diffracted by the acoustic beam and at least one integrator detector (3) for detecting the optical intensity derived from said mixing crystal.

9. Device according to claim 8, **characterised in that** it further includes an integrator detector (2) for detecting the optical intensity diffracted by the acoustic beam.

10. Device according to one of claims 6 and 8, **characterised in that** the optical signal (S) to be measured interacts with at least two amplitude and frequency-modulated acoustic signals and comprising with respect to one another adjustable time differences.

11. Device according to one of claims 6 and 8, **characterised in that** the optical signal (S) to be measured interacts with at least three acoustic signals, at least one of them having a pure or almost pure frequency and at least two others of the amplitude and frequency-modulated acoustic signals and comprising with respect to one another adjustable time differences.

## FIG.1

Signal optique
a mesurer

S

**1** — Interaction acousto optique

Signaux acoustiques

I

Signal diffracte

D

M

**4** — Cristal melangeur non lineaire

**3** — Detecteur a 1 photon

**2** — Detecteur a 1 photon

## FIG.2

Signal optique
a mesurer

S

**1** — Interaction acousto optique

Signaux acoustiques

I

Signal diffracte

M

**5** — Detecteur a 2 photons

**2** — Detecteur a 1 photon